# EUROPEAN PATENT APPLICATION

(11) **EP 4 759 717 A1**
(43) Date of publication of application: **17.06.2026**
(21) Application number: 25223575.9
(22) Date of filing: 15.12.2025
(51) Int. Cl.: B64D 27/40, F02C 7/20

(54) **ATTACHMENT FOR MOUNTING AIRCRAFT PROPULSION SYSTEM TO PYLON STRUCTURE**

(30) Priority: 13.12.2024 US 202418980869
(71) Applicant: RTX Corporation, Farmington, CT 06032 (US)
(72) Inventor: YAZICI, Murat, Glastonbury, 06033 (US); MERCIER, Claude, Vernon, 06066 (US)
(74) Representative: Dehns

(57) **Abstract**

An aircraft system includes a turbine engine case and an attachment that is configured to mount the turbine engine case (64) to a pylon structure (88) and transfer one or more loads between the turbine engine case (64) and the pylon structure (88). The attachment includes a bracket (100), a first link (102A) and a second link (102B). The bracket is configured to mount to the pylon structure (88) through a bracket-pylon pin connection (160) such that the attachment (98) is operable to pivot about the bracket-pylon pin connection (160) and move relative to the pylon structure (88). The bracket is mounted to the first link (102A) through a bracket-first link pin connection (144A). The bracket is mounted to the second link (102B) through a bracket-second link pin connection (144B). The first link (102A) is mounted to the turbine engine case (64) through a first link-case pin connection (146A). The second link (102B) is mounted to the turbine engine case (64) through a second link-case pin connection (146B).

## Description

### BACKGROUND OF THE DISCLOSURE

### 1. Technical Field

This invention relates generally to an aircraft and, more particularly, to mounting an aircraft propulsion system to a pylon structure.

### 2. Background Information

Various types and configurations of propulsion systems are known in the art for an aircraft. Various types and configurations of attachments are also known in the art for mounting an aircraft propulsion system to a pylon structure. While these known aircraft propulsion systems and mounting attachments have various benefits, there is still room in the art for improvement.

### SUMMARY OF THE DISCLOSURE

According to an aspect of the invention, a system is provided for an aircraft. This system includes a turbine engine case and an attachment. The attachment is configured to mount the turbine engine case to a pylon structure and transfer one or more loads between the turbine engine case and the pylon structure. The attachment includes a bracket, a first link and a second link. The bracket is configured to mount to the pylon structure through a bracket-pylon pin connection such that the attachment is operable to pivot about the bracket-pylon pin connection and move relative to the pylon structure. The bracket is mounted to the first link through a bracket-first link pin connection. The bracket is mounted to the second link through a bracket-second link pin connection. The first link is mounted to the turbine engine case through a first link-case pin connection. The second link is mounted to the turbine engine case through a second link-case pin connection.

According to another aspect of the invention, another system is provided for an aircraft. This system includes a turbine engine case, a pylon structure and an attachment. The attachment mounts the turbine engine case to the pylon structure. The attachment is configured to transfer one or more loads between the turbine engine case and the pylon structure. The attachment includes a bracket, a first link, a second link and a center link. The bracket is fixedly connected to the pylon structure. The bracket is mounted to the first link through a bracket-first link pin connection. The bracket is mounted to the second link through a bracket-second link pin connection. The bracket is mounted to the center link through a bracket-center link pin connection. The first link is mounted to the turbine engine case through a first link-case pin connection. The second link is mounted to the turbine engine case through a second link-case pin connection. The center link is mounted to the turbine engine case through a center link-case pin connection.

According to still another aspect of the invention, another system is provided for an aircraft. This system includes a turbine engine case and an attachment. The turbine engine includes a flowpath, a compressor section, a combustor section, a turbine section, a plurality of vanes and a turbine engine case. The flowpath extends through the compressor section, the combustor section and the turbine section from an inlet into the flowpath to an exhaust from the flowpath. The vanes are arranged circumferentially about an axis in an array and are fixedly connected to the turbine engine case. The array of the vanes is disposed in the flowpath between the combustor section and the exhaust from the flowpath. The turbine engine case circumscribes the array of the vanes. The attachment is configured to mount the turbine engine to a pylon structure and transfer one or more loads between the turbine engine and the pylon structure. The attachment includes a bracket, a first link and a second link. The bracket is configured to mount to the pylon structure. The bracket is mounted to the first link through a bracket-first link pin connection. The bracket is mounted to the second link through a bracket-second link pin connection. The first link is mounted to the turbine engine case through a first link-case pin connection that is circumferentially aligned with a first of the vanes. The second link is mounted to the turbine engine case through a second link-case pin connection that is circumferentially aligned with a second of the vanes. The second of the vanes is angularly offset from the first of the vanes about the axis between forty degrees and eighty degrees.

The following optional features may be applied individually, or in any combination, to any of the above aspects of the invention.

The bracket-center link pin connection may include a bracket-center link connection pin and a bracket-center link connection bearing. The bracket-center link connection pin may be configured to mount the bracket-center link connection bearing to the bracket. The bracket-center link connection bearing may be mounted with the center link. The center link-case pin connection may include a center link-case connection pin mated with an over-sized hole in a mount of the turbine engine case.

The first link, the second link and the center link may lay in a common reference plane that is perpendicular to a centerline axis of the turbine engine case.

The one or more loads may include a vertical load and a lateral load.

The bracket-pylon pin connection may include a bracket-pylon connection pin and a bracket-pylon connection bearing. The bracket-pylon connection pin may be configured to mount the bracket-pylon connection bearing to the pylon structure. The bracket-pylon connection bearing may be mounted with the bracket.

The bracket-pylon connection bearing may be configured as or otherwise include a spherical bearing.

The bracket-first link pin connection may include a bracket-first link connection pin and a bracket-first link connection bearing. The bracket-first link connection pin may be configured to mount the bracket-first link connection bearing to the bracket. The bracket-first link connection bearing may be mounted with the first link. In addition or alternatively, the bracket-second link pin connection may include a bracket-second link connection pin and a bracket-second link connection bearing. The bracket-second link connection pin may be configured to mount the bracket-second link connection bearing to the bracket. The bracket-second link connection bearing may be mounted with the second link.

The bracket-first link connection bearing may be configured as or otherwise include a first cylindrical bearing. In addition or alternatively, the bracket-second link connection bearing may be configured as or otherwise include a second cylindrical bearing.

The first link-case pin connection may include a first link-case connection pin and a first link-case connection bearing. The first link-case connection pin may be configured to mount the first link-case connection bearing to the turbine engine case. The first link-case connection bearing may be mounted with the first link. In addition or alternatively, the second link-case pin connection may include a second link-case connection pin and a second link-case connection bearing. The second link-case connection pin may be configured to mount the second link-case connection bearing to the turbine engine case. The second link-case connection bearing may be mounted with the second link.

The first link-case connection bearing may be configured as or otherwise include a first spherical bearing. In addition or alternatively, the second link-case connection bearing may be configured as or otherwise include a second spherical bearing.

The bracket-first link pin connection may be a first bracket-first link pin connection. The bracket may also be mounted to the first link through a second bracket-first link pin connection.

The first bracket-first link pin connection may include a first bracket-first link connection pin and a first bracket-first link connection bearing. The first bracket-first link connection pin may be configured to mount the first bracket-first link connection bearing to the bracket. The first bracket-first link connection bearing may be mounted with the first link. In addition or alternatively, the second bracket-first link pin connection may include a second bracket-first link connection pin and a second bracket-first link connection bearing. The second bracket-first link connection pin may be configured to mount the second bracket-first link connection bearing to the bracket. The second bracket-first link connection bearing may be mounted with the first link.

The first bracket-first link connection bearing may be configured as or otherwise include a first cylindrical bearing. In addition or alternatively, the second bracket-first link connection bearing may be configured as or otherwise include a second cylindrical bearing.

The second bracket-first link pin connection may be located laterally between the first bracket-first link pin connection and the bracket-second link pin connection along the bracket.

A centerline axis of the bracket-pylon pin connection may be parallel with a centerline axis of the turbine engine case.

A centerline axis of the bracket-pylon pin connection may be parallel with each of: a centerline axis of the bracket-first link pin connection; and/or a centerline axis of the bracket-second link pin connection.

A centerline axis of the turbine engine case may be parallel with each of: a centerline axis of the bracket-first link pin connection; a centerline axis of the bracket-second link pin connection; a centerline axis of the first link-case pin connection; and/or a centerline axis of the second link-case pin connection.

The bracket may be mounted to the turbine engine case through a bracket-case pin connection located laterally between the first link-case pin connection and the second link-case pin connection.

The bracket-case pin connection may include a bracket-case connection pin mated with an over-sized hole in a mount of the turbine engine case.

The system may also include a plurality of structural vanes arranged circumferentially about an axis in an array. Each of the structural vanes may be fixed to the turbine engine case. The turbine engine case may circumscribe the array of the structural vanes. The first link-case pin connection may be circumferentially aligned with a first of the structural vanes. The second link-case pin connection may be circumferentially aligned with a second of the structural vanes. The bracket-case pin connection may be circumferentially aligned with a third of the structural vanes.

The third of the structural vanes may be located circumferentially between and circumferentially neighbors the first of the structural vanes and the second of the structural vanes.

The system may also include a plurality of structural vanes arranged circumferentially about an axis in an array. Each of the structural vanes may be fixed to the turbine engine case. The turbine engine case may circumscribe the array of the structural vanes. The first link-case pin connection may be circumferentially aligned with a first of the structural vanes. The second link-case pin connection may be circumferentially aligned with a second of the structural vanes.

The first of the structural vanes may be angularly offset from the second of the structural vanes about the axis between forty degrees and eighty degrees.

The turbine engine case may be configured as or otherwise include an inner turbine engine case. The system may also include an outer turbine engine case, a propulsor rotor and a turbine engine core. The propulsor rotor may be housed within the outer turbine engine case. The turbine engine core may be housed within the inner turbine engine case. The turbine engine core may be configured to drive rotation of the propulsor rotor.

The system may also include a ducted propulsor engine. The ducted propulsor engine may include the turbine engine case and a turbine engine core housed within the turbine engine case. The attachment may be configured as an aft-most attachment configured to mount the ducted propulsor engine to the pylon structure.

The invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side schematic illustration of an aircraft propulsion system with a ducted propulsor rotor.
FIG. 2 is a side schematic illustration of a gas turbine engine of the aircraft propulsion system mounted to an aircraft airframe through a pylon structure with an attachment arrangement.
FIG. 3 is a side schematic illustration of the gas turbine engine mounted to the aircraft airframe through the pylon structure with another attachment arrangement.
FIG. 4 is a partial end view illustration of a propulsion system-pylon attachment mounting a turbine engine case to the pylon structure.
FIG. 5 is an illustration of an attachment bracket.
FIG. 6 is a partial sectional illustration taken along section line 6-6 through the arrangement of FIG. 4.
FIG. 7 is a partial cutaway illustration taken along section line 7A-7A or 7B-7B through the arrangement of FIG. 4.
FIG. 8 is a partial end view illustration of another propulsion system-pylon attachment mounting the turbine engine case to the pylon structure.
FIG. 9 is a partial cutaway illustration taken along section line 9-9 through the arrangement of FIG. 8.
FIG. 10 is a partial end view illustration of still another propulsion system-pylon attachment mounting the turbine engine case to the pylon structure.
FIG. 11 is a partial sectional illustration taken along section line 11-11 through the arrangement of FIG. 10.
FIG. 12 is a partial side schematic illustration of the aircraft propulsion system with an open propulsor rotor and mounted to the pylon structure.

### DETAILED DESCRIPTION

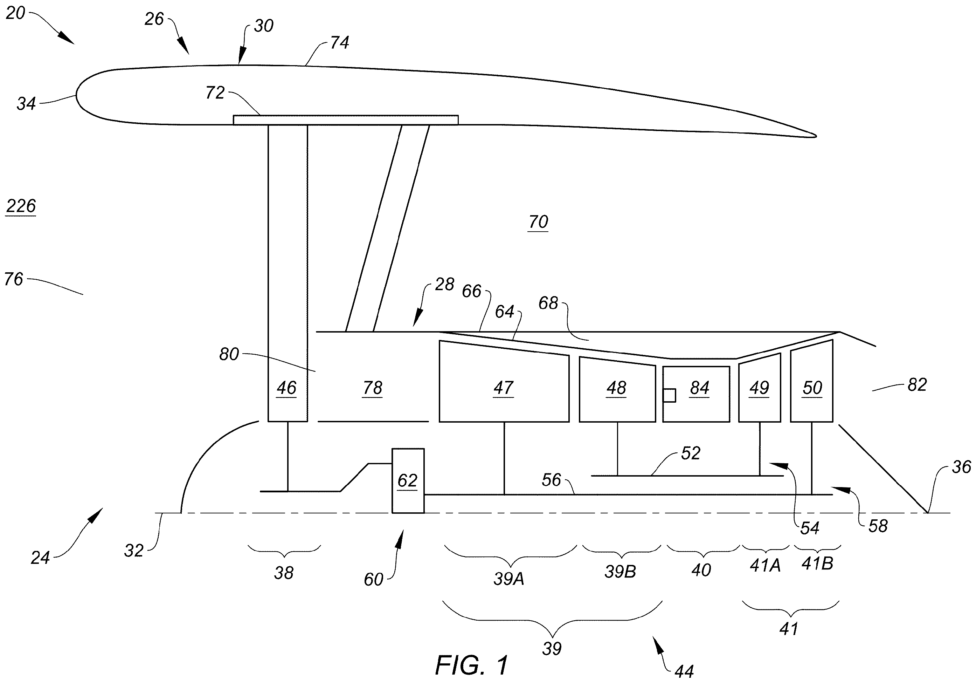

FIG. 1 illustrates a propulsion system 20 for an aircraft. The aircraft may be an airplane, a rotorcraft (e.g., a helicopter), a drone (e.g., an unmanned aerial vehicle (UAV)) or any other manned or unmanned aerial vehicle or system. The aircraft propulsion system 20 may be configured as a ducted propulsor propulsion system and, more particularly, as a turbofan propulsion system. The aircraft propulsion system 20 of the present disclosure, however, is not limited to such an exemplary propulsion system. The aircraft propulsion system 20, for example, may alternatively be configured as a turbojet propulsion system, a turboprop propulsion system, a turboshaft propulsion system, a propfan propulsion system, a pusher fan propulsion system, or any other type of propulsion system which includes one or more ducted and/or open propulsor rotors.

The aircraft propulsion system 20 includes a gas turbine engine 24 housed within a stationary propulsion system housing 26, which propulsion system housing 26 of FIG. 1 includes an inner housing structure 28 and an outer housing structure 30. The aircraft propulsion system 20 extends axially along an axis 32 between an axial forward, upstream end 34 of the aircraft propulsion system 20 and an axial aft, downstream end 36 of the aircraft propulsion system 20. Briefly, the propulsion system axis 32 may be a centerline axis of the aircraft propulsion system 20, the turbine engine 24 and/or one or more of its members. The propulsion system axis 32 may also or alternatively be a rotational axis for one or more members of the turbine engine 24.

The turbine engine 24 may be configured as a ducted propulsor engine and, more particularly, as a turbofan engine. The turbine engine 24 of FIG. 1, for example, includes a propulsor section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. Here, at least (or only) the LPC section 39A, the HPC section 39B, the combustor section 40, the HPT section 41A and the LPT section 41B collectively form a core 44 of the turbine engine 24; e.g., a gas generator of the turbine engine 24.

The engine sections 38-41B of FIG. 1 are arranged (e.g., sequentially) along the propulsion system axis 32 within the propulsion system housing 26. The propulsor section 38 includes a bladed propulsor rotor 46; e.g., a fan rotor. The LPC section 39A includes a bladed low pressure compressor (LPC) rotor 47. The HPC section 39B includes a bladed high pressure compressor (HPC) rotor 48. The HPT section 41A includes a bladed high pressure turbine (HPT) rotor 49. The LPT section 41B includes a bladed low pressure turbine (LPT) rotor 50. The propulsor rotor 46, the LPC rotor 47, the HPC rotor 48, the HPT rotor 49 and the LPT rotor 50 each include a rotor base (e.g., a disk or a hub) and a plurality of rotor blades (e.g., airfoils, rotor vanes, etc.). The rotor blades are arranged and may be equispaced circumferentially around the respective rotor base in one or more arrays. With this arrangement, the rotor blades may be arranged into one or more stages. Each of the rotor blades is connected to (e.g., formed integral with or otherwise attached to) the respective rotor base. Each of the rotor blades projects radially (e.g., spanwise) out from the respective rotor base to a distal tip of the respective rotor blade.

The HPC rotor 48 is coupled to and rotatable with the HPT rotor 49. The HPC rotor 48 of FIG. 1, for example, is connected to the HPT rotor 49 through a high speed shaft 52. At least (or only) the HPC rotor 48, the HPT rotor 49 and the high speed shaft 52 collectively form a high speed rotating structure 54; e.g., a high speed spool of the engine core 44. This high speed rotating structure 54 of FIG. 1 and its members 48, 49 and 52 are rotatable about the propulsion system axis 32. However, it is contemplated the high speed rotating structure 54 may alternatively be rotatable about another axis radially and/or angularly offset from the rotational axis of the propulsor rotor 46 and/or the centerline axis of the turbine engine 24.

The LPC rotor 47 is coupled to and rotatable with the LPT rotor 50. The LPC rotor 47 of FIG. 1, for example, is connected to the LPT rotor 50 through a low speed shaft 56. At least (or only) the LPC rotor 47, the LPT rotor 50 and the low speed shaft 56 collectively form a low speed rotating structure 58; e.g., a low speed spool of the engine core 44. This low speed rotating structure 58 is further coupled to the propulsor rotor 46 through a drivetrain 60. The drivetrain 60 may be configured as a geared drivetrain, where a geartrain 62 (e.g., a transmission, a speed change device, an epicyclic geartrain, etc.) is disposed between and operatively couples the propulsor rotor 46 to the low speed rotating structure 58 and its LPT rotor 50. With this arrangement, the propulsor rotor 46 may rotate at a different (e.g., slower) rotational speed than the low speed rotating structure 58 and its LPT rotor 50. Alternatively, the drivetrain 60 may be configured as a direct-drive drivetrain, where the geartrain 62 is omitted. With such an arrangement, the propulsor rotor 46 rotates at a common (the same) rotational speed as the low speed rotating structure 58 and its LPT rotor 50. The low speed rotating structure 58 of FIG. 1 and its members 47, 50 and 56 as well as the propulsor rotor 46 are rotatable about the propulsion system axis 32. However, it is contemplated the low speed rotating structure 58 may alternatively be rotatable about another axis radially and/or angularly offset from the rotational axis of the propulsor rotor 46 and/or the centerline axis of the turbine engine 24.

The inner housing structure 28 of FIG. 1 includes an inner case 64 (e.g., a core case) for the turbine engine 24, an inner nacelle structure 66 (sometimes referred to as an inner fixed structure (IFS)) and an internal inner housing compartment 68. The inner case 64 is disposed radially outboard of, extends axially along and may circumscribe one or more or all of the engine sections 39A-41B and their respective bladed engine rotors 47-50. The inner case 64 may thereby house and provide a support structure for the respective bladed engine sections 39A-41B and their respective engine rotors 47-50. The inner nacelle structure 66 is configured to provide an aerodynamic cover over the engine core 44 and its inner case 64. The inner housing compartment 68 of FIG. 1 is formed by and is disposed radially between the inner case 64 and an inner barrel of the inner nacelle structure 66. The inner housing structure 28 and its inner nacelle structure 66 may also form a radial inner peripheral boundary of a bypass flowpath 70 (e.g., an annular bypass flowpath) within the aircraft propulsion system 20.

The outer housing structure 30 of FIG. 1 includes an outer case 72 (e.g., a fan case) for the turbine engine 24 and an outer nacelle structure 74. The outer case 72 is disposed radially outboard of, extends axially along and may circumscribe the propulsor section 38 and its propulsor rotor 46. The outer case 72 may thereby house and provide a containment structure for the propulsor section 38 and its propulsor rotor 46. The outer nacelle structure 74 is configured to provide an aerodynamic cover over the outer case 72. The outer housing structure 30 and its outer nacelle structure 74 may also form a radial outer peripheral boundary of the bypass flowpath 70.

During operation, ambient air from outside of the aircraft enters the aircraft propulsion system 20 and its turbine engine 24 through an airflow inlet 76 into the aircraft propulsion system 20 of FIG. 1. This air is directed across the propulsor section 38 and into a core flowpath 78 (e.g., annular core flowpath) and the bypass flowpath 70. The core flowpath 78 of FIG. 1 extends sequentially through the LPC section 39A, the HPC section 39B, the combustor section 40, the HPT section 41A and the LPT section 41B from an airflow inlet 80 into the core flowpath 78 to a combustion products exhaust 82 out from the core flowpath 78 and the engine core 44. The air entering the core flowpath 78 may be referred to as "core air". The bypass flowpath 70 extends through a bypass duct, which bypass flowpath 70 and bypass duct bypass (e.g., are disposed radially outboard of and extend along) the engine core 44 and the inner housing structure 28. The air within the bypass flowpath 70 may be referred to as "bypass air".

The core air is compressed by the LPC rotor 47 and the HPC rotor 48 and is directed into a combustion chamber 84 (e.g., an annular combustion chamber) of a combustor (e.g., an annular combustor) in the combustor section 40. Fuel is injected into the combustion chamber 84 by one or more fuel injectors and mixed with the compressed core air to provide a fuel-air mixture. This fuel-air mixture is ignited and combustion products thereof flow through and sequentially drive rotation of the HPT rotor 49 and the LPT rotor 50 about the propulsion system axis 32. The rotation of the HPT rotor 49 and the LPT rotor 50 respectively drive rotation of the HPC rotor 48 and the LPC rotor 47 about the propulsion system axis 32 and, thus, compression of the air received from the core inlet 80. The rotation of the LPT rotor 50 also drives rotation of the propulsor rotor 46 about the propulsion system axis 32. The rotation of the propulsor rotor 46 propels the bypass air through and out of the bypass flowpath 70. The propulsion of the bypass air may account for a majority of thrust generated by the turbine engine 24 of FIG. 1.

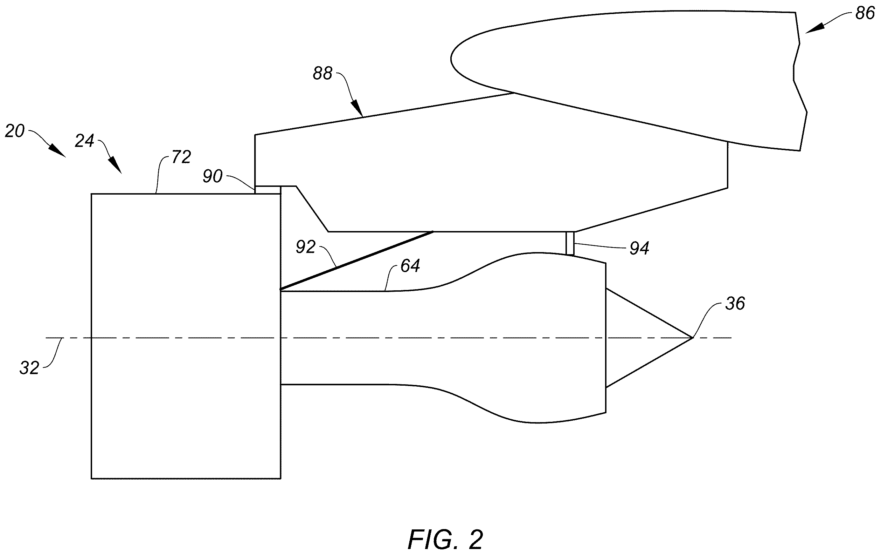

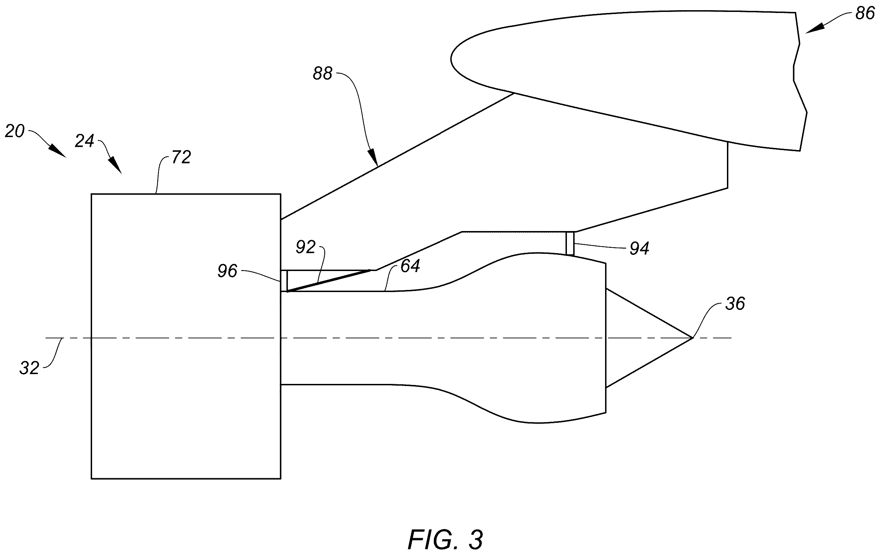

Referring to FIG. 2, the aircraft propulsion system 20 and its turbine engine 24 are mounted to an airframe 86 of the aircraft by a pylon structure 88. This pylon structure 88 is mounted to the aircraft propulsion system 20 and its turbine engine 24 by one or more propulsion system-pylon attachments. For example, the pylon structure 88 of FIG. 2 is mounted to the outer case 72 by an outer case attachment 90. The pylon structure 88 is mounted to the inner case 64 by one or more forward inner case attachments 92 (one visible in FIG. 2). The forward inner case attachment(s) 92 may be axial forwardmost attachment(s) mounting the inner case 64 to the pylon structure 88. The pylon structure 88 is also attached to the inner case 64 at an aft inner case attachment 94. This aft inner case attachment 94 may be an axial aftmost attachment mounting the inner case 64 and, more generally, the aircraft propulsion system 20 and its turbine engine 24 to the pylon structure 88. The present disclosure, however, is not limited to such an exemplary aircraft propulsion system-pylon attachment arrangement. For example, the outer case attachment 90 between the pylon structure 88 and the outer case 72 may be omitted as shown in FIG. 3. With such an arrangement, an additional attachment 96 may be included at (e.g., on, adjacent or proximate) a support structure coupling the inner case 64 to the outer case 72. Here, the additional attachment 96 may functionally replace the omitted outer case attachment such that structural couplings between (a) the aircraft propulsion system 20 and its turbine engine 24 and (b) the pylon structure 88 are independent of the outer case 72. Similarly, in another example, the functionality of the omitted outer case attachment may be integrated into a single attachment structure with the forward inner case attachment(s) 92.

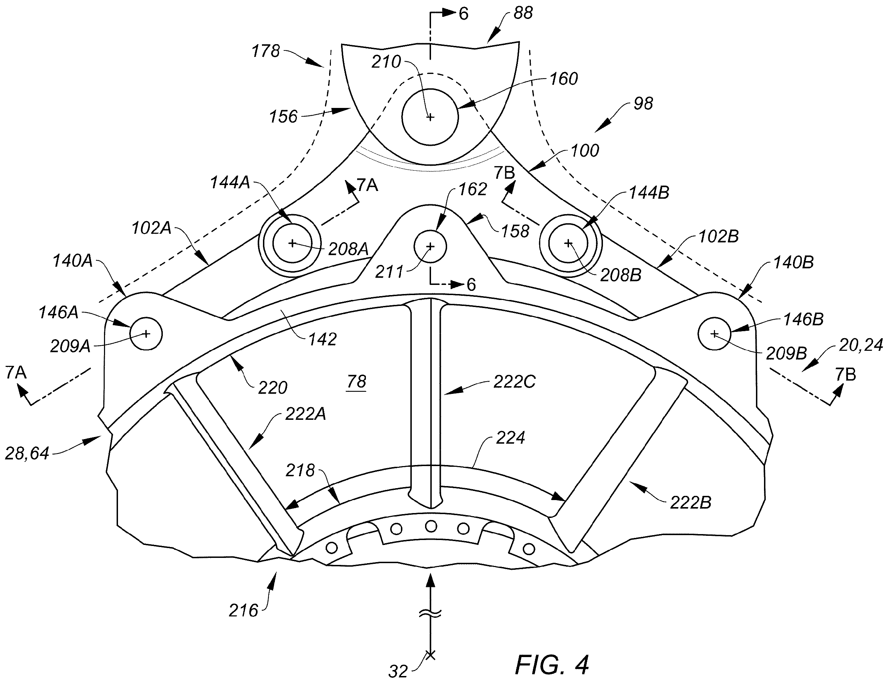

FIG. 4 illustrates an aft propulsion system-pylon attachment 98 for mounting and structurally tying the aircraft propulsion system 20 and its turbine engine 24 to the pylon structure 88. This aft propulsion system-pylon attachment 98 may be configured as an aftmost structural coupling between (a) the aircraft propulsion system 20 and its turbine engine 24 and (b) the pylon structure 88. The aft propulsion system-pylon attachment 98 of FIG. 4, for example, may be configured as the aft inner case attachment 94 of FIG. 2 or FIG. 3. The aft propulsion system-pylon attachment 98 of the present disclosure, however, is not limited to such exemplary aircraft propulsion system-pylon attachment arrangements. The aft propulsion system-pylon attachment 98 of FIG. 4 includes an attachment bracket 100 (e.g., a yoke), an attachment first link 102A and an attachment second link 102B.

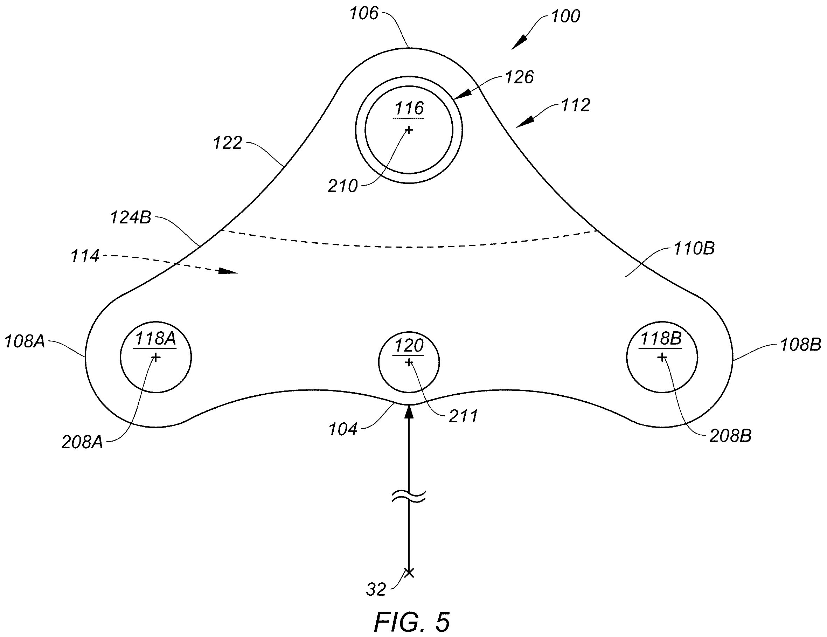

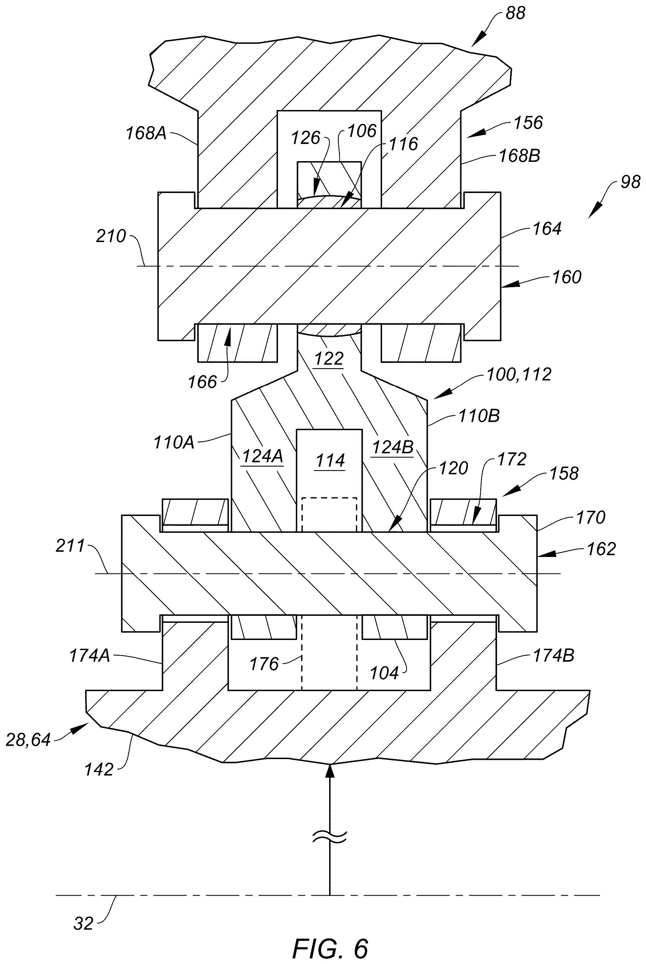

Referring to FIG. 5, the attachment bracket 100 extends radially from a radial inner side 104 of the attachment bracket 100 to a radial outer side 106 of the attachment bracket 100. The attachment bracket 100 extends laterally between and to opposing lateral sides 108A and 108B (generally referred to as "108") of the attachment bracket 100. Herein, the term "lateral" may describe a circumferential direction about the propulsion system axis 32 and/or a tangential direction to a reference circle circumscribing the propulsion system axis 32. Referring to FIG. 6, the attachment bracket 100 extends axially along the propulsion system axis 32 between and to opposing axial sides 110A and 110B (generally referred to as "110") of the attachment bracket 100. The attachment bracket 100 includes a bracket body 112 and a link receptacle 114; e.g., a slot. Referring to FIG. 5, the attachment bracket 100 also includes an outer pin connection aperture 116, one or more side inner pin connection apertures 118A and 118B (generally referred to as "118") and a center inner pin connection aperture 120.

The bracket body 112 of FIG. 6 includes an outer bracket base 122 and one or more inner bracket legs 124A and 124B (generally referred to as "124"). The bracket base 122 is disposed at the bracket (or radial) outer side 106. The outer bracket base 122 extends axially along the propulsion system axis 32 between the opposing axial sides 110A and 110B of the attachment bracket 100. Referring to FIG. 5, the outer bracket base 122 extends laterally between the opposing lateral sides 108A and 108B of the attachment bracket 100. Each bracket leg 124 is connected to (e.g., formed integral with or otherwise attached to) the outer bracket base 122. Each bracket leg 124 extends laterally between the opposing lateral sides 108A and 108B of the attachment bracket 100. Referring to FIG. 6, each bracket leg 124 projects radially inward (e.g., in a direction towards the propulsion system axis 32) from the bracket base 122 to the bracket inner side 104. The first bracket leg 124A is disposed at the axial first side 110A of the attachment bracket 100. The second bracket leg 124B is disposed at the axial second side 110B of the attachment bracket 100. This second bracket leg 124B is also axially spaced from the first bracket leg 124A to form the link receptacle 114.

The link receptacle 114 extends axially within the bracket body 112 between the bracket legs 124. The link receptacle 114 projects radially outward (e.g., in a direction away from the propulsion system axis 32) into the bracket body 112 from the bracket inner side 104 to the bracket base 122. Referring to FIG. 5, the link receptacle 114 extends laterally through the bracket body 112 between the opposing lateral sides 108A and 108B of the attachment bracket 100.

The outer pin connection aperture 116 is located at an intermediate location (e.g., a lateral center) laterally between the opposing lateral sides 108A and 108B of the attachment bracket 100. The outer pin connection aperture 116 is disposed in the bracket base 122 at or otherwise towards the bracket outer side 106. The outer pin connection aperture 116 projects axially through the bracket body 112 and its bracket base 122. This outer pin connection aperture 116 may be formed by a bracket-pylon connection bearing 126 (e.g., a spherical bearing) mounted to the bracket body 112 and its bracket base 122.

The first side inner pin connection aperture 118A is located at a corner (e.g., a tapering intersection) between the bracket first lateral side 108A and the bracket inner side 104. The second side inner pin connection aperture 118B is located at a lateral opposing corner (e.g., a tapering intersection) between the bracket second lateral side 108B and the bracket inner side 104. Each of these side inner pin connection apertures 118 projects axially through the bracket body 112 and each of its bracket legs 124; see also FIG. 6.

The center inner pin connection aperture 120 is located at an intermediate location (e.g., a lateral center) laterally between the opposing lateral sides 108A and 108B of the attachment bracket 100. Moreover, the center inner pin connection aperture 120 is located laterally (e.g., centered) between the side inner pin connection apertures 118 and/or laterally aligned with the outer pin connection aperture 116. The center inner pin connection aperture 120 is disposed at or otherwise towards the bracket inner side 104. The center inner pin connection aperture 120 projects axially through the bracket body 112 and each of its bracket legs 124; see also FIG. 6.

The attachment bracket 100 and its bracket body 112 may be configured as a monolithic body. The bracket body members 122, 124A and 124B, for example, may be cast, machined, forged, additively manufactured and/or otherwise formed together as a single, unitary body. The present disclosure, however, is not limited to such an exemplary attachment bracket construction. The bracket body 112, for example, may alternatively be a multi-segment body. The bracket body 112, for example, may be formed by two halves, where each of these halves may include a respective axial half of the bracket base 122 and a respective one of the bracket legs 124.

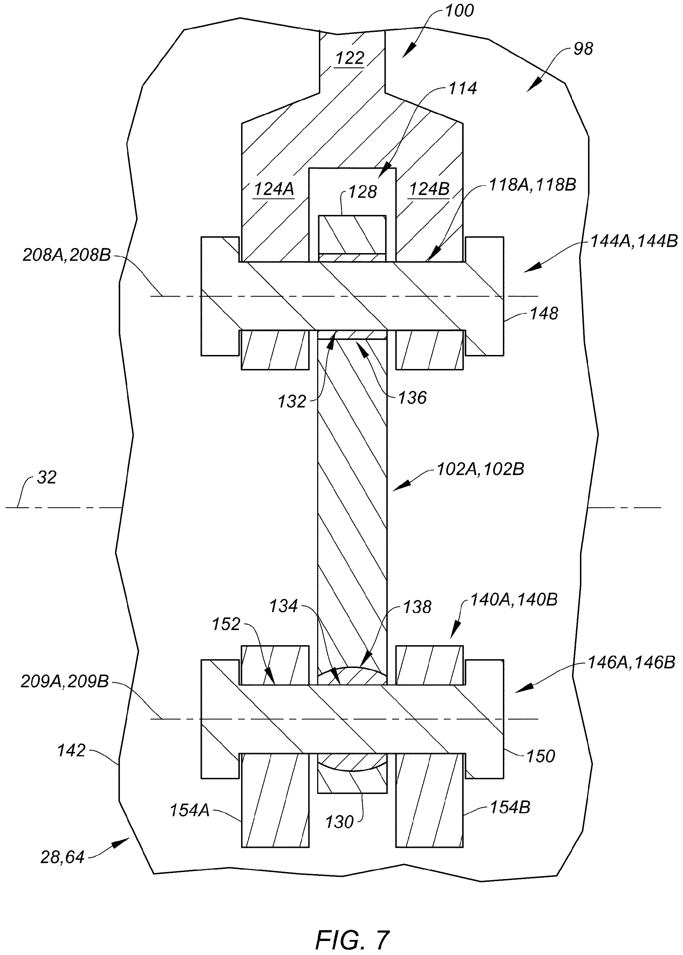

Referring to FIG. 7, each attachment link 102 may be configured as a fixed length linkage. Each attachment link 102 extends longitudinally between and to opposing longitudinal ends 128 and 130 of the respective attachment link 102. Each attachment link 102 includes a first pin connection aperture 132 and a second pin connection aperture 134. The first pin connection aperture 132 is disposed at the first link end 128. The second pin connection aperture 134 is disposed at the second link end 130. Each pin connection aperture 132, 134 projects axially through the respective attachment link 102. The first pin connection aperture 132 may be formed by a bracket-link connection bearing 136 (e.g., a cylindrical bearing) mounted to the respective attachment link 102. The second pin connection aperture 134 may be formed by a link-case connection bearing 138 (e.g., a spherical bearing) mounted to the respective attachment link 102.

Each attachment link 102 of FIG. 7 (see also FIG. 4) is coupled to and extends generally laterally between the attachment bracket 100 and a respective engine case mount 140A, 140B (generally referred to as "140") (e.g., a clevis mount) of the inner case 64, which engine case mount 140 is connected to a sidewall 142 of the inner case 64. Each attachment link 102 of FIG. 7, for example, is mounted to the attachment bracket 100 through a respective bracket-link pin connection 144A, 144B (generally referred to as "144"). Each attachment link 102 is mounted to the respective engine case mount 140A, 140B through a respective link-case pin connection 146A, 146B (generally referred to as "146").

The bracket-link pin connection 144 of FIG. 7 includes the bracket-link connection bearing 136 and a bracket-link connection pin 148. The bracket-link connection pin 148 is mated with the respective side inner pin connection aperture 118 and the first pin connection aperture 132. More particularly, the bracket-link connection pin 148 projects sequentially through (a) a first portion of the respective side inner pin connection aperture 118 in the first bracket leg 124A, (b) the first pin connection aperture 132, and (c) a second portion of the respective side inner pin connection aperture 118 in the second bracket leg 124B. The bracket-link connection pin 148 may be configured as a bolt, a clevis pin or any other type of suitable pin fastener.

The link-case pin connection 146 of FIG. 7 includes the link-case connection bearing 138 and a link-case connection pin 150. The link-case connection pin 150 is mated with a pin connection aperture 152 in the respective engine case mount 140 and the second pin connection aperture 134. More particularly, the link-case connection pin 150 projects sequentially through (a) a first portion of the pin connection aperture 152 in a first flange 154A of the engine case mount 140, (b) the second pin connection aperture 134, and (c) a second portion of the pin connection aperture 152 in a second flange 154B of the engine case mount 140. The link-case connection pin 150 may be configured as a bolt, a clevis pin or any other type of suitable pin fastener.

The attachment bracket 100 of FIG. 6 (see also FIG. 4) is also coupled to and extends radially between a pylon mount 156 (e.g., a clevis mount) of the pylon structure 88 and another engine case mount 158 (e.g., a clevis mount) of the inner case 64. Briefly, the pylon mount 156 is connected to a base (e.g., a beam, a frame, a truss, etc.) of the pylon structure 88. The engine case mount 158 is connected to the sidewall 142 of the inner case 64. The attachment bracket 100 of FIG. 6 is mounted to the pylon mount 156 through a bracket-pylon pin connection 160. The attachment bracket 100 is mounted to the engine case mount 158 through a bracket-case pin connection 162; e.g., a fail-safe pin connection.

The bracket-pylon pin connection 160 of FIG. 6 includes the bracket-pylon connection bearing 126 and a bracket-pylon connection pin 164. The bracket-pylon connection pin 164 is mated with the outer pin connection aperture 116 and a pin connection aperture 166 in the pylon mount 156. More particularly, the bracket-pylon connection pin 164 projects sequentially through (a) a first portion of the pin connection aperture 166 in a first flange 168A of the pylon mount 156, (b) the outer pin connection aperture 116, and (c) a second portion of the pin connection aperture 166 in a second flange 168B of the pylon mount 156. The bracket-pylon connection pin 164 may be configured as a bolt, a clevis pin or any other type of suitable pin fastener.

The bracket-pylon pin connection 160 may be the only coupling between the attachment bracket 100 and the pylon structure 88. The attachment bracket 100 and, more generally, the entire aft propulsion system-pylon attachment 98 of FIG. 4 may thereby be operable to pivot about the bracket-pylon pin connection 160 and move relative to the pylon structure 88.

The bracket-case pin connection 162 of FIG. 6 includes a bracket-case connection pin 170. The bracket-case connection pin 170 is mated with the center inner connection aperture 120 in the attachment bracket 100 and a (e.g., oversized) pin connection aperture 172 in the engine case mount 158. More particularly, the bracket-case connection pin 170 projects sequentially through (a) a first portion of the pin connection aperture 172 in a first flange 174A of the engine case mount 158, (b) a first portion of the center inner connection aperture 120 in the first bracket leg 124A, (c) the link receptacle 114, (d) a second portion of the center inner connection aperture 120 in the second bracket leg 124B, and (e) a second portion of the pin connection aperture 172 in a second flange 174B of the engine case mount 158. However, in other embodiments, it is contemplated the engine case mount 158 may include a single mounting flange disposed in the link receptacle 114; e.g., see dashed line mount 176. The bracket-case connection pin 170 may be configured as a bolt, a clevis pin or any other type of suitable pin fastener.

While the attachment bracket 100 is mounted to the inner case 64 through the bracket-case pin connection 162, the bracket-case pin connection 162 may be configured as a fail-safe pin connection. For example, the first portion of the pin connection aperture 172 in the first flange 174A of the engine case mount 158 and the second portion of the pin connection aperture 172 in the second flange 174B of the engine case mount 158 may each be oversized such that the bracket-case connection pin 170 may move (e.g., slightly shift or otherwise be displaced) relative to the engine case mount 158 during normal operation. However, in an unlikely event one of the attachment links 102 and/or a pin connection therefor should fail, the bracket-case connection pin 170 may contact the engine case mount flanges 174A and 174B (generally referred to as "174") and functionally replace the coupling associated with the failed attachment link and/or pin connection therefor.

Referring to FIG. 4, the aft propulsion system-pylon attachment 98 is configured to transfer one or more loads between the aircraft propulsion system 20 and its turbine engine 24 and the pylon structure 88. More particularly, the aft propulsion system-pylon attachment 98 is configured to transfer one or more loads between the inner case 64 and the pylon structure 88. These loads may include a vertical load (e.g., a radial up-or-down load inline with the propulsion system axis 32 and the pylon structure 88) and/or a lateral load (e.g., a horizontal side-to-side load). However, the attachment bracket 100 and the attachment links 102 are arranged such that a torsional load may not be reacted by and transferred into the aft propulsion system-pylon attachment 98 from the turbine engine 24 and its inner case 64. Rather, such a torsional load may be reacted by and transferred through one of the other attachments 90, 96 of FIG. 2 or FIG. 3, for example. An overall form factor of the aft propulsion system-pylon attachment 98 of FIG. 4 may thereby be reduced facilitating a reduction in an overall size and exterior aero-lines of a pylon nacelle 178 housing the pylon structure 88 at an aft of the aircraft propulsion system 20. For example, side panels of the pylon nacelle 178 may substantially hug a lateral side of the pylon structure 88 and an outer side of the inner case 64 with a relatively small radius bend there in-between. By reducing the pylon nacelle size, aerodynamic drag and/or a total weight of the pylon nacelle 178 may be reduced thereby facilitating improved aircraft propulsion system efficiency.

In some embodiments, referring to FIG. 4, each attachment link 102 may be mounted to the attachment bracket 100 by the single respective bracket-link pin connection 144. With this arrangement of FIG. 4, the aft propulsion system-pylon attachment 98 may accommodate movement (e.g., slight shifting) between (a) the turbine engine 24 and its inner case 64 and (b) the attachment bracket 100 since each attachment link 102 is operable to pivot at each of its pin connections 144 and 146. The aft propulsion system-pylon attachment 98 may also accommodate movement (e.g., slight shifting) between (a) the attachment bracket 100 and (b) the pylon structure 88 through the bracket-pylon pin connection 160.

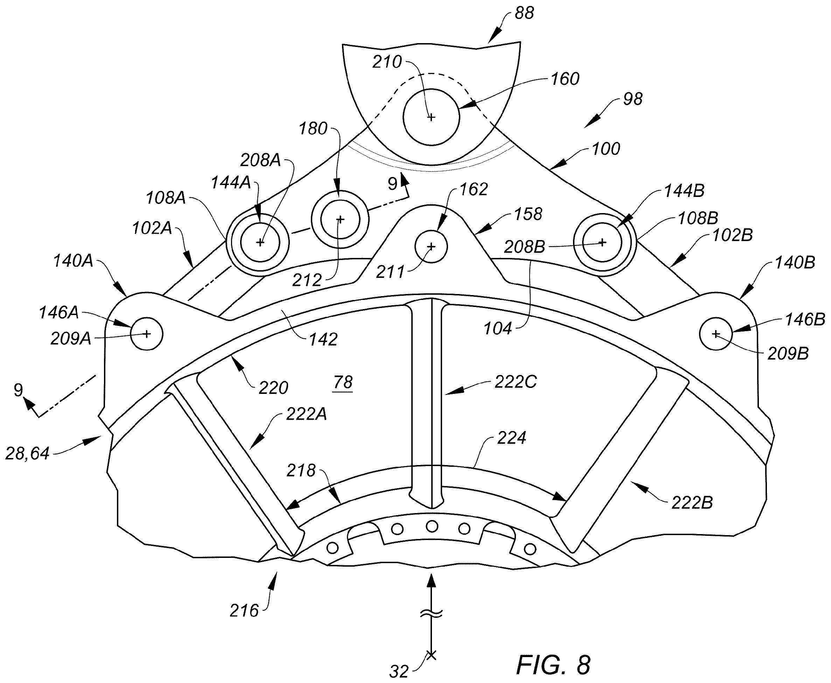

In some embodiments, referring to FIG. 8, a single respective one of the attachment links 102 (e.g., the first link 102A of FIG. 8) may be further mounted to the attachment bracket 100 by an additional bracket-link pin connection 180. This additional bracket-link pin connection 180 may be located along the bracket inner side 104 and laterally between (a) the first bracket-link pin connection 144A and (b) the second bracket-link pin connection 144B / the bracket-case pin connection 162. With this arrangement, the first link 102A may no longer pivot about the first bracket-link pin connection 144A. The aft propulsion system-pylon attachment 98 of FIG. 8 may thereby accommodate movement (e.g., slight shifting) between (a) the attachment bracket 100 and (b) the pylon structure 88 through the bracket-pylon pin connection 160, with little or no accommodation of movement between (a) the turbine engine 24 and its inner case 64 and (b) the attachment bracket 100 as described above with respect to the aft propulsion system-pylon attachment 98 of FIG. 4.

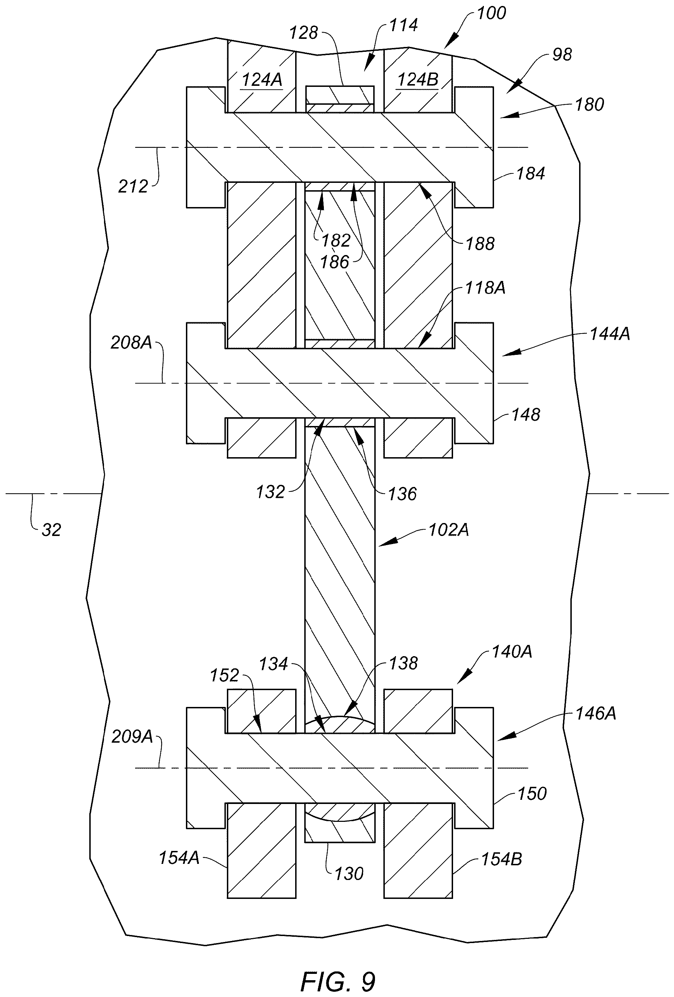

Referring to FIG. 9, the additional bracket-link pin connection 180 includes an additional bracket-link connection bearing 182 (e.g., a cylindrical bearing) and an additional bracket-link connection pin 184. Briefly, the additional bracket-link connection bearing 182 is mounted to the first link 102A of FIG. 9 and configured to form by an additional pin connection aperture 186 through the first link 102A. The additional bracket-link connection pin 184 is mated with (a) an additional inner pin connection aperture 188 in the attachment bracket 100 and (b) the additional pin connection aperture 186. More particularly, the additional bracket-link connection pin 184 projects sequentially through (a) a first portion of the additional inner pin connection aperture 188 in the first bracket leg 124A, (b) the additional pin connection aperture 186 and (c) a second portion of the additional inner pin connection aperture 188 in the second bracket leg 124B. The additional bracket-link connection pin 184 may be configured as a bolt, a clevis pin or any other type of suitable pin fastener.

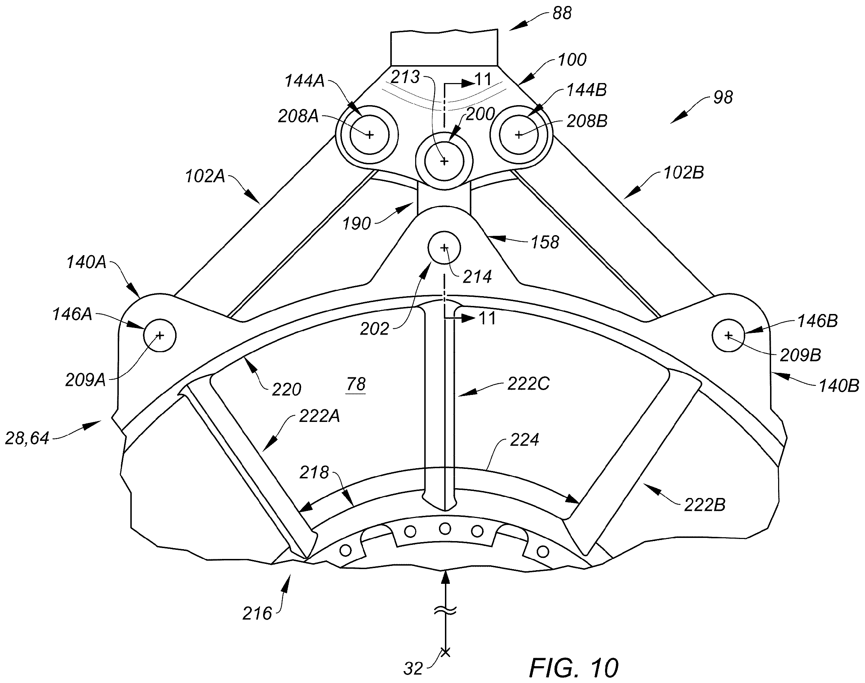

In some embodiments, referring to FIGS. 4 and 8, the attachment bracket 100 may be mounted to the pylon structure 88 through the bracket-pylon pin connection 160. As described above, this bracket-pylon pin connection 160 facilitates pivoting of the attachment bracket 100 and, more generally, the entire aft propulsion system-pylon attachment 98 about the bracket-pylon pin connection 160 and, thus, movement relative to the pylon structure 88. In other embodiments, referring to FIG. 10, the attachment bracket 100 may alternatively be formed integral with, bonded to, rigidly bolted to and/or otherwise fixedly connected the pylon structure 88. Therefore, unlike the arrangements of FIGS. 4 and 5, the attachment bracket 100 of FIG. 10 is fixed to and does not move relative to the pylon structure 88. However, the attachment links 102 are still arranged such that a torsional load may not be reacted by and transferred into the aft propulsion system-pylon attachment 98 from the turbine engine 24 and its inner case 64.

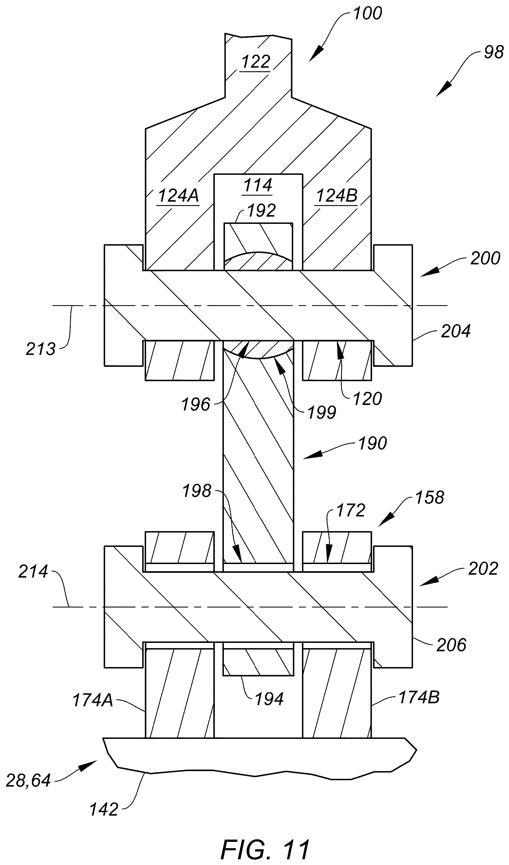

In some embodiments, referring to FIGS. 4 and 8, the attachment bracket 100 may be mounted directly to the inner case 64 through the bracket-case pin connection 162. In other embodiments, referring to FIG. 11, the attachment bracket 100 may be indirectly mount to the inner case 64 through an attachment center link 190.

The center link 190 may be configured as a fixed length linkage. The center link 190 extends longitudinally between and to opposing longitudinal outer and inner ends 192 and 194 of the center link 190. The center link 190 includes an outer pin connection aperture 196 and an (e.g., oversized) inner pin connection aperture 198. The outer pin connection aperture 196 is disposed at the outer link end 192. The inner pin connection aperture 198 is disposed at the inner link end 194. Each pin connection aperture 196, 198 projects axially through the center link 190. The outer pin connection aperture 196 may be formed by a center bracket-link connection bearing 199 (e.g., a spherical bearing) mounted to the center link 190. The inner pin connection aperture 198 may be formed directly by the center link 190 as an oversized hole.

The center link 190 of FIG. 11 (see also FIG. 10) is coupled to and extends radially between the attachment bracket 100 and the engine case mount 158. The center link 190 of FIG. 11, for example, is mounted to the attachment bracket 100 through a center bracket-link pin connection 200. The center link 190 is mounted to the engine case mount 158 through a center link-case pin connection 202.

The center bracket-link pin connection 200 of FIG. 11 includes the center bracket-link connection bearing 199 and a center bracket-link connection pin 204. The center bracket-link connection pin 204 is mated with the center inner pin connection aperture 120 and the outer pin connection aperture 196. More particularly, the center bracket-link connection pin 204 projects sequentially through (a) the first portion of the center inner pin connection aperture 120 in the first bracket leg 124A, (b) the outer pin connection aperture 196 and (c) the second portion of the center inner pin connection aperture 120 in the second bracket leg 124B. The center bracket-link connection pin 204 may be configured as a bolt, a clevis pin or any other type of suitable pin fastener. With this arrangement, the center link 190 is substantially static. The center link 190 may (or may not) also be stabilized with an additional bracket coupled to the attachment bracket 100, or otherwise.

The center link-case pin connection 202 of FIG. 11 includes a center link-case connection pin 206. The center link-case connection pin 206 is mated with the (e.g., oversized) inner pin connection aperture 198 and the (e.g., oversized) pin connection aperture 172 in the engine case mount 158. More particularly, the center link-case connection pin 206 projects sequentially through (a) the first portion of the pin connection aperture 172 in the first flange 174A of the engine case mount 158, (b) the inner pin connection aperture 198 and (c) the second portion of the pin connection aperture 172 in the second flange 174B of the engine case mount 158. The center link-case pin connection 202 may be configured as a bolt, a clevis pin or any other type of suitable pin fastener.

While the center link 190 is mounted to the inner case 64 through the center link-case connection pin 206, the center link-case pin connection 202 may be configured as a fail-safe pin connection. For example, the first portion of the pin connection aperture 172 in the first flange 174A of the engine case mount 158, the second portion of the pin connection aperture 172 in the second flange 174B of the engine case mount 158 and/or the inner pin connection aperture 198 may each be oversized such that the center link-case connection pin 206 may move (e.g., slightly shift or otherwise be displaced) relative to the engine case mount 158 during normal operation. However, in the unlikely event one of the attachment links 102 and/or a pin connection therefor should fail, the center link-case connection pin 206 may contact the engine case mount flanges 174 and the center link 190 and thereby functionally replace the coupling associated with the failed attachment link and/or pin connection therefor.

Referring to FIGS. 4, 8 and 10, each of the pin connections 144A, 144B, 146A, 146B, 160, 162, 180, 200, 202 has a centerline axis 208-214; e.g., a central pivot axis. Each of these pin connection axes 208-214 may be parallel with one another. One or more or all of the pin connection axes 208-214 may also (or alternatively) be parallel with the propulsion system axis 32, or at least a centerline axis of the inner case 64. With such an arrangement and as shown in FIGS. 4, 8 and 10, each of the attachment members 100, 102A, 102B, 190 may lay in a common reference plane (e.g., the plane of FIG. 4, 8, 10) that is, for example, perpendicular to the propulsion system axis 32, or at least the centerline axis of the inner case 64.

The inner housing structure 28 of FIGS. 4, 8 and 10 includes a stator vane structure 216. This stator vane structure 216 is arranged along the core flowpath 78, for example downstream of the combustor section 40 of FIG. 1. More particularly, the stator vane structure 216 may be arranged along the core flowpath 78 downstream of the turbine section 41 of FIG. 1 The stator vane structure 216 of FIGS. 4, 8 and 10 may be configured as a turbine exhaust case (TEC). The stator vane structure 216 includes a radial inner platform 218, a radial outer platform 220 and a plurality of stator vanes 222A-C (generally referred to as "222"); e.g., structural vanes, struts, etc. A radial outer side of the inner platform 218 forms a radial inner peripheral boundary of the core flowpath 78 longitudinally through the stator vane structure 216. A radial inner side of the outer platform 220 forms a radial outer peripheral boundary of the core flowpath 78 longitudinally through the stator vane structure 216. This outer platform 220 also forms an axial section of the inner case 64. The stator vanes 222 are arranged and may (or may not) be equispaced circumferentially around the propulsion system axis 32 in an annular array; e.g., a circular array. Each of these stator vanes 222 projects radially across the core flowpath 78 from the inner platform 218 to the outer platform 220. Each of the stator vanes 222 is also connected to (e.g., formed integral with or otherwise attached to) the inner platform 218 and the outer platform 220. More particularly, each of the stator vanes 222 is configured to structurally tie the inner platform 218 to the outer platform 220 across the core flowpath 78.

Each of the pin connections 146A, 146B, 162 or 202 may be circumferentially aligned with a respective one of the stator vanes 222A-C about the propulsion system axis 32. With this arrangement, loads may be transferred from the respective vanes 222A-C, through the outer platform 220, into the aft propulsion system-pylon attachment 98 along relatively direct (e.g., straight) load paths.

The stator vane 222C aligned with the pin connection 162 or 202 may be disposed circumferentially between and circumferentially neighbor (a) the stator vane 222A aligned with the first link-case pin connection 146A and (b) the stator vane 222B aligned with the second link-case pin connection 146B. However, in other embodiments, it is contemplated an intervening stator vane may be disposed circumferentially between the set of pin connection aligned stator vanes 222A and 222C, 222B and 222C.

The stator vane 222A aligned with the first link-case pin connection 146A is angularly offset from the stator vane 222B aligned with the second link-case pin connection 146B by an offset angle 224 about the propulsion system axis 32. This offset angle 224 may be equal to or greater than thirty degrees (30°) or forty degrees (40°). The offset angle 224 may alternatively (or also) be equal to or less than ninety degrees (90°) or eighty degrees (80°). The offset angle 224 of FIGS. 4, 8 and 10, for example, may be between forty degrees (40°) and sixty degrees (60°) or between sixty degrees (60°) and eighty degrees (80°), inclusive. With such arrangements, the array of the stator vanes 222 may include a total number of nine (9) to eighteen (18) stator vanes.

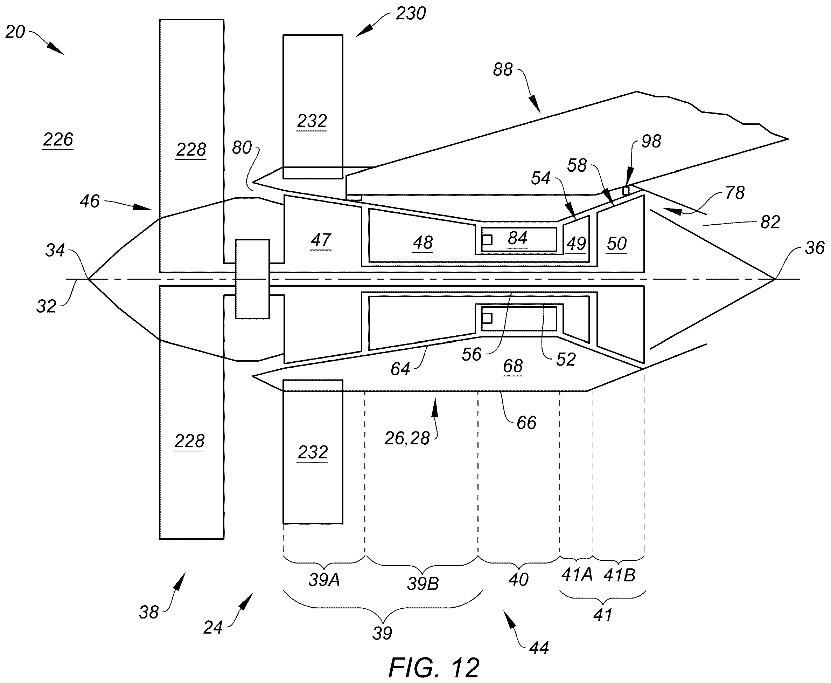

For ease of description, the aircraft propulsion system 20 is described above as a ducted propulsor propulsion system; e.g., the turbofan propulsion system. However, as described above, the present disclosure is not limited to such an exemplary aircraft propulsion system. For example, referring to FIG. 12, the outer housing structure 30 (see FIG. 1) may be omitted from the propulsion system housing 26 to open the propulsor rotor 46 up to an environment 226 external to the aircraft propulsion system 20. More particularly, the propulsor rotor 46 of FIG. 12 includes a plurality of open propulsor blades 228 arranged circumferentially about the propulsion system axis 32 in an annular array. Each of these propulsor blades 228 projects radially out from a base of the propulsor rotor 46, into the external environment 226, to an unshrouded distal tip of the respective propulsor blade 228. Each propulsor blade 228 is thereby configured as an un-ducted and unshrouded propulsor blade which is exposed to (e.g., disposed in) the surrounding external environment 226. Whis this arrangement, the propulsor rotor 46 is an open propulsor rotor (e.g., an un-ducted propulsor rotor) and the aircraft propulsion system 20 is configured as an open rotor propulsion system. This aircraft propulsion system 20 of FIG. 12, however, can still be coupled to the pylon structure 88 using any one of the various propulsion system-pylon attachment arrangements described above.

The aircraft propulsion system 20 of FIG. 12 is configured with an open guide vane structure 230. This guide vane structure 230 of FIG. 12 includes a plurality of open exit guide vanes 232; e.g., airfoils. The guide vanes 232 are arranged and may (or may not) be equispaced circumferentially about the propulsion system axis 32 in an array; e.g., a circular array. This guide vane structure 230 and its guide vanes 232 are arranged axially next to (e.g., adjacent) the propulsor rotor 46 and its propulsor blades 228. The guide vane structure 230 and its guide vanes 232 of FIG. 12, for example, are arranged downstream of the propulsor rotor 46 and its propulsor blades 228, without (e.g., any) other elements axially therebetween to obstruct, turn and/or otherwise influence the air propelled by the propulsor rotor 46 to the guide vane structure 230 for example. Each of the guide vanes 232 projects radially out from an exterior surface of the inner housing structure 28, into the external environment 226, to an unshrouded distal tip of the respective guide vane 232. Each guide vane 232 is thereby configured as an un-ducted and unshrouded guide vane which is exposed to (e.g., disposed in) the surrounding external environment 226. With the foregoing arrangement, the guide vane structure 230 and its guide vanes 232 are configured to condition (e.g., straighten out, de-swirl, etc.) an outer stream of air propelled by the propulsor rotor 46 within the external environment 226 that bypass the engine core 44.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system for an aircraft, comprising:
a turbine engine case (64); and
an attachment (98) configured to mount the turbine engine case (64) to a pylon structure (88) and transfer one or more loads between the turbine engine case (64) and the pylon structure (88), the attachment including a bracket (100), a first link (102A) and a second link (102B),
the bracket (100) configured to mount to the pylon structure (88) through a bracket-pylon pin connection (160) such that the attachment is operable to pivot about the bracket-pylon pin connection (160) and move relative to the pylon structure (88), the bracket (100) mounted to the first link (102A) through a bracket-first link pin connection (144A), and the bracket (100) mounted to the second link (102B) through a bracket-second link pin connection (144B),
the first link (102A) mounted to the turbine engine case (64) through a first link-case pin connection (146A), and
the second link (102B) mounted to the turbine engine case (64) through a second link-case pin connection (146B).

2. The system of claim 1, wherein:
the bracket-pylon pin connection (160) includes a bracket-pylon connection pin (164) and a bracket-pylon connection bearing (126);
the bracket-pylon connection pin (164) is configured to mount the bracket-pylon connection bearing (126) to the pylon structure (88); and
the bracket-pylon connection bearing (126) is mounted with the bracket (100).

3. The system of claim 1 or 2, wherein:
the bracket-first link pin connection (144A) includes a bracket-first link connection pin (148) and a bracket-first link connection bearing (136), the bracket-first link connection pin (148) is configured to mount the bracket-first link connection bearing (136) to the bracket (100), and the bracket-first link connection bearing (136) is mounted with the first link (102A); and/or
the bracket-second link pin connection (144B) includes a bracket-second link connection pin (148) and a bracket-second link connection bearing (136), the bracket-second link connection pin (148) is configured to mount the bracket-second link connection bearing (136) to the bracket (100), and the bracket-second link connection bearing (136) is mounted with the second link (102B).

4. The system of any preceding claim, wherein:
the first link-case pin connection (146A) includes a first link-case connection pin (150) and a first link-case connection bearing (138), the first link-case connection pin (150) is configured to mount the first link-case connection bearing (138) to the turbine engine case (64), and the first link-case connection bearing (138) is mounted with the first link (102A); and/or
the second link-case pin connection (146B) includes a second link-case connection pin (150) and a second link-case connection bearing (138), the second link-case connection pin (150) is configured to mount the second link-case connection bearing (138) to the turbine engine case (64), and the second link-case connection bearing (138) is mounted with the second link (102B).

5. The system of any preceding claim, wherein the bracket-first link pin connection (144A) is a first bracket-first link pin connection (144A), and the bracket is further mounted to the first link through a second bracket-first link pin connection (180).

6. The system of claim 5, wherein:
the first bracket-first link pin connection (144A) includes a first bracket-first link connection pin (148) and a first bracket-first link connection bearing (136), the first bracket-first link connection pin (148) is configured to mount the first bracket-first link connection bearing (136) to the bracket (100), and the first bracket-first link connection bearing (136) is mounted with the first link (102A); and/or
the second bracket-first link pin connection (180) includes a second bracket-first link connection pin (184) and a second bracket-first link connection bearing (182), the second bracket-first link connection pin (184) is configured to mount the second bracket-first link connection bearing (182) to the bracket (100), and the second bracket-first link connection bearing (182) is mounted with the first link (102A).

7. The system of claim 5 or 6, wherein the second bracket-first link pin connection (180) is located laterally between the first bracket-first link pin connection (144A) and the bracket-second link pin connection (144B) along the bracket.

8. The system of any preceding claim, wherein:
i) a centerline axis (210) of the bracket-pylon pin connection (160) is parallel with a centerline axis (32) of the turbine engine case (64); and/or
ii) a centerline axis (210) of the bracket-pylon pin connection (160) is parallel with each of:
a centerline axis (208A) of the bracket-first link pin connection (144A); and
a centerline axis (208B) of the bracket-second link pin connection (144B); and/or
iii) a centerline axis (32) of the turbine engine case (64) is parallel with each of:
a centerline axis (208A) of the bracket-first link pin connection (144A);
a centerline axis (208B) of the bracket-second link pin connection (144B);
a centerline axis (209A) of the first link-case pin connection (146A); and
a centerline axis (209B) of the second link-case pin connection (146B).

9. The system of any preceding claim, wherein the bracket (100) is mounted to the turbine engine case (64) through a bracket-case pin connection (162) located laterally between the first link-case pin connection (146A) and the second link-case pin connection (146B).

10. The system of claim 9, wherein the bracket-case pin connection (162) includes a bracket-case connection pin (170) mated with an over-sized hole in a mount of the turbine engine case (64).

11. The system of claim 9 or 10, further comprising a plurality of structural vanes (222) arranged circumferentially about an axis (32) in an array, each of the plurality of structural vanes (222) fixed to the turbine engine case (64),
the turbine engine case circumscribing the array of the plurality of structural vanes (222); the first link-case pin connection (146A) circumferentially aligned with a first of the plurality of structural vanes (222A);
the second link-case pin connection (146B) circumferentially aligned with a second of the plurality of structural vanes (222B); and
the bracket-case pin connection (162) circumferentially aligned with a third of the plurality of structural vanes (222C).

12. The system of any of claims 1 to 10, further comprising a plurality of structural vanes (222) arranged circumferentially about an axis (32) in an array, each of the plurality of structural vanes (222) fixed to the turbine engine case (64),
the turbine engine case circumscribing the array of the plurality of structural vanes (222);
the first link-case pin connection (146A) circumferentially aligned with a first of the plurality of structural vanes (222A); and
the second link-case pin connection (146B) circumferentially aligned with a second of the plurality of structural vanes (222B).

13. The system of any preceding claim, wherein:
the system further comprises a ducted propulsor engine including the turbine engine case (64) and a or the turbine engine core (44) housed within the turbine engine case (64), wherein the attachment (98) is configured as an aft-most attachment (94) configured to mount the ducted propulsor engine to the pylon structure (88); and/or
the turbine engine case (64) comprises an inner turbine engine case (64), and the system further comprises:
an outer turbine engine case (72);
a propulsor rotor (46) housed within the outer turbine engine case (72); and
a turbine engine core (44) housed within the inner turbine engine case (64), the turbine engine core (44) configured to drive rotation of the propulsor rotor (46).

14. A system for an aircraft, comprising:
a turbine engine case (64);
a pylon structure (88); and
an attachment (98) mounting the turbine engine case (64) to the pylon structure (88), the attachment (98) configured to transfer one or more loads between the turbine engine case (64) and the pylon structure (88), and the attachment including a bracket (100), a first link (102A), a second link (102B) and a center link (190);
the bracket (100) fixedly connected to the pylon structure (88), the bracket (100) mounted to the first link (102A) through a bracket-first link pin connection (144A), the bracket (100) mounted to the second link (102B) through a bracket-second link pin connection (144B), and the bracket (100) mounted to the center link (190) through a bracket-center link pin connection (200),
the first link (102A) mounted to the turbine engine case (64) through a first link-case pin connection (146A),
the second link (102B) mounted to the turbine engine case (64) through a second link-case pin connection (146B), and
the center link (190) mounted to the turbine engine case (64) through a center link-case pin connection (202),
optionally wherein:
the bracket-center link pin connection (200) includes a bracket-center link connection pin (204) and a bracket-center link connection bearing (199), the bracket-center link connection pin (204) is configured to mount the bracket-center link connection bearing (199) to the bracket (100), and the bracket-center link connection bearing (199) is mounted with the center link (190), and the center link-case pin connection (202) includes a center link-case connection pin (206) mated with an over-sized hole in a mount of the turbine engine case (64); and/or
the first link (102A), the second link (102B) and the center link (190) lay in a common reference plane that is perpendicular to a centerline axis (32) of the turbine engine case (64).

15. A system for an aircraft, comprising:
a turbine engine (24) including a flowpath, a compressor section (39), a combustor section (40), a turbine section (41), a plurality of vanes (222) and a turbine engine case (64), the flowpath extending through the compressor section (39), the combustor section (40) and the turbine section (41) from an inlet into the flowpath to an exhaust from the flowpath, the plurality of vanes (222) arranged circumferentially about an axis (32) in an array and fixedly connected to the turbine engine case (64), the array of the plurality of vanes (222) disposed in the flowpath between the combustor section (40) and the exhaust from the flowpath, and the turbine engine case (64) circumscribing the array of the plurality of vanes (222); and
an attachment (98) configured to mount the turbine engine (24) to a pylon structure (88) and transfer one or more loads between the turbine engine (24) and the pylon structure (88), the attachment including a bracket (100), a first link (102A) and a second link (102B),
the bracket (100) configured to mount to the pylon structure (88), the bracket (100) mounted to the first link (102A) through a bracket-first link pin connection (144A), and the bracket mounted to the second link (102B) through a bracket-second link pin connection (144B),
the first link (102A) mounted to the turbine engine case (64) through a first link-case pin connection (146A) that is circumferentially aligned with a first of the plurality of vanes (222A), and
the second link (102B) mounted to the turbine engine case (64) through a second link-case pin connection (146B) that is circumferentially aligned with a second of the plurality of vanes (222B), and the second of the plurality of vanes (222B) is angularly offset from the first of the plurality of vanes (222A) about the axis (32) between forty degrees and eighty degrees.
